(19) Europäisches Patentamt
European Patent Office
Office européen des brevets

(11) Veröffentlichungsnummer: **0 258 346**
**B1**

(12) # EUROPÄISCHE PATENTSCHRIFT

(45) Veröffentlichungstag der Patentschrift: **27.12.90**

(51) Int. Cl.[5]: **C 09 K 19/42**, C 09 K 19/02

(21) Anmeldenummer: **87901438.9**

(22) Anmeldetag: **14.02.87**

(86) Internationale Anmeldenummer:
**PCT/EP87/00078**

(87) Internationale Veröffentlichungsnummer:
**WO 87/05317 11.09.87 Gazette 87/20**

(54) **FLÜSSIGKRISTALLANZEIGEELEMENT.**

(30) Priorität: **26.02.86 DE 3606153**

(43) Veröffentlichungstag der Anmeldung:
**09.03.88 Patentblatt 88/10**

(45) Bekanntmachung des Hinweises auf die Patenterteilung:
**27.12.90 Patentblatt 90/52**

(84) Benannte Vertragsstaaten:
**CH DE FR GB LI**

(56) Entgegenhaltungen:
**EP-A-0 168 012**
**WO-A-86/03769**
**WO-A-86/05799**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder: **WEBER, Georg**
**Wilhelm-Leuschner-Strasse 38**
**D-6106 Erzhausen (DE)**
Erfinder: **SCHEUBLE, Bernhard**
**Bluff 100 100-1 Yamate-cho Naka-ku**
**Yokohama-shi Kanagawa 231 (JP)**
Erfinder: **KRAUSE, Joachim**
**Samuel-Morse-Strasse 14**
**D-6110 Dieburg (DE)**

**EP 0 258 346 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Flüssigkristallanzeigeelement (FK-Anzeigeelement) mit niedrigem Multiplexverhältnis und niedriger Betriebsspannung.

Für FK-Anzeigeelemente werden die Eigenschaften nematischer oder nematisch-cholesterischer flussigkristalliner Materialien ausgenutzt, ihre optischen Eigenschaften wie Lichtabsorption, Lichtstreuung, Doppelbrechung, Reflexionsvermögen oder Farbe unter dem Einfluß elektrischer Felder zu verändern. Die Funktion derartiger Anzeigeelemente beruht dabei beispielsweise auf den Phänomenen der dynamischen Streuung, der Deformation aufgerichteter Phasen, dem Guest-Host-Effekt, dem Schadt-Helfrich-Effekt in der verdrillten Zellen oder dem cholesterisch-nematischen Phasenübergang.

Für die technische Anwendung dieser Effekte in elektronischen Bauelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren FK-Phasen eine flüssigkristalline Mesophase in einem geeigneten Temperaturbereich, niedrige Viskosität, niedrige optische Anisotropie, hohe Steilheit der elektrooptischen Kennlinie und ausreichendes Lösungsvermögen für pleochroitische Farbstoffe gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen lassen sich jedoch auf diese Weise nicht leicht herstellen, da Komponenten mit hohen Schmelz- und Klärpunkten den Gemischen häufig auch eine hohe Viskosität verleihen. Dadurch werden die Schaltzeiten der damit hergestellten elektrooptischen Anzeigeelemente in unerwünschter Weise verändert.

Es besteht somit immer noch ein großer Bedarf, nach FK-Phasen mit größerem Arbeitstemperaturbereich, niedriger Viskosität (und damit kurzen Schaltzeiten) und niedriger Schwellenspannung.

Die meisten FK-Anzeigeelemente, die heute produziert werden, werden im Multiplexbetrieb mit Multiplexverhältnissen von etwa 1:2 bis 1:4 und mit Betriebsspannungen von ca. 3 Volt angesteuert. Der Arbeitstemperaturbereich solcher Anzeigeelemente liegt im allgemeinen etwa zwischen −10 und +50°.

Insbesondere für Anwendungen im Freien, z.B. auch in Automobilen, ist jedoch ein breiterer Arbeitstemperaturbereich wünschenswert.

Der Erfindung liegt die Aufgabe zugrunde, FK-Anzeigeelemente bereitzustellen, die einen breiten Arbeitsttemperaturbereich besitzen und die oben angegebenen Nachteile nicht oder nur in geringerem Maße aufweisen.

Es wurde gefunden, daß diese Aufgabe gelöst werden kann, wenn man in diesen Anzeigeelementen bestimmte flüssigkristalline Dielektrika verwendet, die Arbeitstemperaturbereiche zwischen −30 und +80°C und Viskositäten von weniger als 40 m Pa·s bei 20° besitzen.

Gegenstand der Erfindung ist ein FK-Anzeigeelement mit statischer oder Multiplex-Ansteuerung mit niedrigem Multiplexverhältnis und einer Betriebsspannung unterhalb 3,3 Volt, enthaltend ein flüssigkristallines Dielektrikum, dadurch gekennzeichnet, daß sich der Arbeitstemperaturbereich von −30°C bis +80°C erstreckt, die Viskosität des Dielektrikums bei 20°C weniger als 40 m Pa·s beträgt und daß das Dielektrikum mindestens eine Komponente der Formel I enthält:

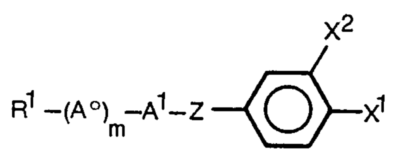

I

worin $R^1$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können,

$A^\circ$ und $A^1$ jeweils unabhängig voneinander Cy, Dio oder Phe,

Z —CO—O—, —O—CO—, $—CH_2—O—$, $—O—CH_2—$ oder eine Einfachbindung

$X^1$ F, Cl oder —CN

$X^2$ F oder Cl

m 0 oder 1,

Cy trans-1,4-Cyclohexylen,

Dio trans-1,3-Dioxan-2,5-diyl und

Phe unsubstituiertes oder durch Fluor substituiertes 1,4-Phenylen bedeutet,

mit der Maßgabe, daß das Dielektrikum keine Komponente der Formel II enthält

$$R^2—Dio—A^2—(Z—A^3)_n—R^3 \qquad II$$

worin $R^2$ Alkyl mit 1 bis 12 C-Atomen, worin auch eine oder zwei nicht benachbarte $CH_2$-Gruppen durch

O-Atome, —CO—, —O—CO—, —CO—O— und/oder —CH=CH-Gruppen ersetzt sein können,

$R^3$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können, F, Cl oder CN,

$A^2$ und $A^3$ jeweils 1,4-Phenylen oder Cy,

n 0, 1 oder 2 bedeutet und

Z, Dio und Cy die angegebenen Bedeutungen haben.

In der EP—A—0 168 012 sind flüssig-kristalline Kompositionen mit C—N-übergängen von 0°C oder darunter und N—I-Übergangen zwischen 59,5 und 66,1°C und entsprechenden Arbeitstemperaturbereichen beschrieben. In der WO—A—8 603 769 sind flüssig-kristalline Phasen angegeben, die sowohl Verbindungen der Formel I als auch Verbindungen der Formel II enthalten. In der WO—A—8 605 799 sind Flüssigkkristallphasen beschrieben, die Verbindungen einer bestimmten Formel enthalten, welche sich mit der vorliegenden Formel I überlappt; jedoch findet sich dort kein Hinweis auf die 3-$X^2$-4-$X^1$-phenylgruppe, die in den Verbindungen der Formel I zwingend enthalten ist. Die beiden letztgenannten Druckschriften wurden erst nach dem vorliegenden Prioritätstag veröffentlicht.

Bevorzugte Verbindungen der Formel I entsprechenden den folgenden Teilformeln (worin FCP den 3-Fluor-4-cyanphenylrest bedeutet):

$R^1$-Phe-COO-FCP Ia

$R^1$-Cy-Phe-COO-FCP Ib

$R^1$-Dio-Phe-COO-FCP Ic

Weitere bevorzugte Verbindungen entsprechen den folgenden Teilformeln:

$R^1$-Cy-FCP Ic

$R^1$-Dio-FCP Id

$R^1$-Phe-FCP Ie

$R^1$-Cy-Dio-FCP If

$R^1$-Dio-Cy-FCP Ig

$R^1$-Cy-Cy-FCP Ih

$R^1$-Cy-Phe-FCP Ii

$R^1$-Phe-Cy-FCP Ij

$R^1$-Phe-Dio-FCP Ik

$R^1$-Dio-Phe-FCP Il

$R^1$-Cy-COO-FCP Im

$R^1$-Dio-COO-FCP In

$R^1$-Dio-Cy-COO-FCP Io

$R^1$-Cy-Cy-COO-FCP Ip

$R^1$-Phe-$CH_2$O-FCP Iq

Der Rest $R^1$ bedeutet vorzugsweise geradkettiges Alkyl mit 1—9 C-Atomen, wie Methyl, Ethyl, Propyl, Butyl, Pentyl, Hexyl, Heptyl, Octyl oder Nonyl, ferner geradkettiges Alkoxy mit 1—9 C-Atomen mitt Methoxy, Ethoxy, Propoxy, Butoxy, Pentoxy, Hexoxy, Heptoxy, Octoxy, oder Nonoxy, ferner Alkoxyalkyl mit 2—9 C-Atomen wie Methoxymethyl, Ethoxymethyl.

Phe bedeutet vorzugsweise eine unsubstituierte 1,4-Phenylgruppe, ferner bevorzugt eine 2-Fluor-1,4-phenylengruppe.

Die einzelnen Verbindungen der Formel I, die in den erfindungsgemäßen FK-Anzeigeelementen verwendet werden können, sind entweder bekannt, oder sie können analog zu bekannten Verbindungen hergestellt werden.

Bevorzugte erfindungsgemäß verwendbare Dielektrika enthalten z.B. etwa 7—20% I. Sie enthalten

insgesamt vorzugsweise 10—20, insbesondere, 12—18 Komponenten.

Der Arbeitstemperaturbereich dieser Dielektrika liegt zwischen −30 und +80°, vorzugsweise zwischen −40 und +85°. Ihre Viskosität beträgt bei 20° weniger als 40, vorzugsweise weniger als 30 m Pa·s, ihre Schwellenspannung beträgt vorzugsweise höchstens 1,7, insbesondere höchstens 1,5 Volt.

Die Herstellung der erfindungsgemäß verwendbaren Dielektrika erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielswiese durch Destillation.

Die Dielektrika können auch weitere, dem Fachmann bekannte und in der Literatur beschriebene Zusätze enthalten. Beispielsweise können 0—15% pleochroitische Farbstoffe zugesetzt werden, ferner Leitsalze, vorzugsweise Ethyl-dimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band *24*, Seiten 249—258, (1973)) zur Verbesserung der Leitfähigkeit oder Substantzen zur Veränderung der dielektrischen Anisotropie, der Viskosität und/oder der Orientierung der nematischen Phasen. Derartige Substanzen sind z.B. in den DE—OS 22 09 127, 22 40 864, 23 21 632, 23 38 281, 24 50 088, 26 37 430 und 28 53 728 beschrieben.

Die folgenden Beispiele sollen die Erfindung erläutern, ohne sie zu begrenzen.

Es bedeutet:

| | |
|---|---|
| S—N | Phasenübergangs-Temperatur smektisch-nematisch, |
| Klp. | Klärpunkt, |
| Visk. | Viskosität bei 20° (m PA·s), |
| Schw. | Schwellenspannung einer TN-Zelle bei 20°, Beobachtungswinkel 0° (senkrecht) und 10% Kontrast. |

Vor und nachstehend sind alle Temperaturen in °C angegeben. Die Prozentzahlen sind Gewichtsprozente.

## Beispiel 1

Ein Gemisch aus

| | |
|---|---|
| 5% | p-trans-4-Ethylcyclohexyl-benzonitril |
| 12% | p-trans-4-Propylcyclohexyl-benzonitril |
| 8% | p-trans-4-Butylcyclohexyl-benzonitril |
| 10% | p-trans-4-Pentylcyclohexyl-benzonitril |
| 6% | p-Ethylbenzoesäure-(3-fluor-4-cyanphenylester) |
| 8% | p-Propylbenzoesäure-(3-fluor-4-cyanphenylester) |
| 5% | p-(trans-5-Pentyl-1,3-dioxan-2-yl)-benzoesäure-(3-fluor-4-cyanphenylester) |
| 16% | trans,trans-4-Propylcyclohexyl-4'-propoxycyclohexan |
| 9% | 4-Ethyl-4'-(trans-4-propylcyclohexyl)-biphenyl |
| 8% | 4-Ethyl-4'-(trans-4-pentylcyclohexyl)-biphenyl |
| 3% | 4,4'-Bis-(trans-4-propylcyclohexyl)-biphenyl |
| 3% | 4-(trans-4-Pentylcyclohexyl)-4'-(trans-4-propylcyclohexyl)-biphenyl |
| 3% | 2-Fluor-4,4'-bis-(trans-4-propylcyclohexyl)-biphenyl |
| 4% | 2-Fluor-4-(trans-4-pentylcyclohexyl)-4'-(trans-4-propylcyclohexyl)-biphenyl |

zeigt S—N < −30°, Klp. +87°, Visk. 27, Schw. 1,4 V.

## Beispiel 2

Ein Gemisch aus

| | |
|---|---|
| 15% | p-trans-4-Propylcyclohexyl-benzonitril |
| 6% | p-Ethylbenzoesäure-(3-fluor-4-cyanphenylester) |
| 8% | p-Propylbenzoesäure-(3-fluor-4-cyanphenylester) |
| 5% | p-(trans-5-Pentyl-1,3-dioxan-2-yl)-benzoesäure-(3-fluor-4-cyanphenylester) |
| 13% | trans,trans-4-Propyl-4'-propoxycyclohexylcyclohexan |
| 13% | trans,trans-4-Methoxy-4'-pentylcyclohexylcyclohexan |
| 12% | trans,trans-4-Ethoxy-4'-pentylcyclohexylcyclohexan |
| 4% | trans,trans-4-Propylcyclohexyl-cyclohexan-4'-carbonsäure-(trans-4-propylcyclohexylester) |

4% trans,trans-4-Propylcyclohexyl-cyclohexan-4'-carbonsäure-(trans-4-pentylcyclohexylester)
4% trans,trans-4-Butylcyclohexyl-cyclohexan--4'-carbonsäure-(trans-4-propylcyclohexylester)
4% trans,trans-4-Butylcyclohexyl-cyclohexan-4'-carbonsäure-(trans-4-pentylcyclohexylester)
3% 4,4'-Bis-(trans-4-propylcyclohexyl)-biphenyl
3% 4-(trans-4-Pentylcyclohexyl)-4'-(trans-4-propylcyclohexyl-biphenyl
3% 2-Fluor-4,4'-(trans-4-propylcyclohexyl)-biphenyl
3% 2-Fluor-4-(trans-4-pentylcyclohexyl)-4'-(trans-4-propylcyclohexyl)-biphenyl

zeigt S—N < −30°, Klp. +89°, Visk. 25, Schw. 1,4 V.

## Beispiel 3

Ein Gemisch aus

15% p-trans-4-Propylcyclohexyl-benzonitril
6% trans-1-p-Ethoxyphenyl-4-propylcyclohexan
3,6% p-Ethylbenzoesäure-(3-fluor-4-cyanphenylester)
4,8% p-Propylbenzoesäure-(3-fluor-4-cyanphenylester)
5% p-(trans-5-Pentyl-1,3-dioxan-2-yl)-benzoesäure-(3-fluor-4-cyanphenylester)
13,8% trans,trans-4-Propyl-4'-propoxycyclohexyl-cyclohexan
13,4% trans,trans-4-Methoxy-4'-pentylcyclohexyl-cyclohexan
12,4% trans,trans-4-Ethoxy-4'-pentylcyclohexyl-cyclohexan
2,4% trans,trans-4-Propylcyclohexyl-cyclohexan-4'-carbonsäure-(trans-4-propylcyclohexylester)
2,4% trans,trans-4-Propylcyclohexyl-cyclohexan-4'-carbonsäure-(trans-4-pentylcyclohexylester)
2,4% trans,trans-4-Butylcyclohexyl-cyclohexan-4'-carbonsäure-(trans-4-propylcyclohexylester)
2,4% trans,trans-4-Butylcyclohexyl-cyclohexan-4'-carbonsäure-(trans-4-pentylcyclohexylester)
3% 4,4-Bis-(trans-4-propylcyclohexyl)-biphenyl
4,2% 4-(trans-4-Pentylcyclohexyl)-4'-(trans-4-propylcyclohexyl)-biphenyl
1,6% 4,4'-Bis-(trans-4-pentylcyclohexyl)-biphenyl
3,4% 2-Fluor-4,4'-bis-(trans-4-propylcyclohexyl)-biphenyl
4,2% 2-Fluor-4-(trans-4-pentylcyclohexyl-4'-(trans-4-propylcyclohexyl)-biphenyl

zeigt S—N < −40°, Klp. +90°, Visk. 21, Schw. 1,6 V.

## Beispiel 4

Ein Gemisch aus

5% p-trans-4-Ethylcyclohexyl-benzonitril
17% p-trans-4-Propylcyclohexyl-benzonitril
8% p-trans-4-Butylcyclohexyl-benzonitril
10% p-trans-4-Pentylcyclohexyl-benzonitril
3% 4-Ethyl-4'-cyanbiphenyl
6% p-Ethylbenzoesäure-(3-fluor-4-cyanphenylester)
8% p-Propylbenzoesäure-(3-fluor-4-cyanphenylester)
5% 4-Cyan-4'-(trans-4-pentylcyclohexyl)-biphenyl
9% trans-1-p-Ethoxyphenyl-4-propylcyclohexan
11% 4-Ethyl-4'-(trans-4-propylcyclohexyl)-biphenyl
9% 4-Ethyl-4'-(trans-4-pentylcyclohexyl)-biphenyl
3% 4,4'-Bis-(trans-4-propylcyclohexyl)-biphenyl
4% 4-(trans-4-Pentylcyclohexyl)-4'-(trans-4-propyl-cyclohexyl)-biphenyl
3% 2-Fluor-4,4'-bis-(trans-4-propylcyclohexyl)-biphenyl
4% 2-Fluor-4-(trans-4-pentylcyclohexyl)-4'-(trans-4-propylcyclohexyl)-biphenyl

zeigt S—N < −30°, Klp. +95°, Visk. 28, Schw. 1,5 V.

## Beispiel 5

Ein Gemisch aus

10% p-trans-4-Ethylcyclohexyl-benzonitril
18% p-trans-4-Propylcyclohexyl-benzonitril
10% p-trans-4-Pentylcyclohexyl-benzonitril
5% p-Ethylbenzoesäure-(3-fluor-4-cyanphenylester)
7% p-Propylbenzosäure-(3-fluor-4-cyanphenylester)
13% trans-1-p-Ethoxyphenyl-4-propylcyclohexan
9% 4-Ethyl-4'-(trans-4-propylcyclohexyl)-biphenyl

| | |
|---|---|
| 8% | 4-Ethyl-4'-(trans-4-pentylcyclohexyl)-biphenyl |
| 4% | 4,4'-Bis-(trans-4-propylcyclohexyl)-biphenyl |
| 5% | 4-(trans-4-Pentylcyclohexyl)-4'-(trans-4-propyl-cyclohexyl)-biphenyl |
| 4% | 4,4'-Bis-(trans-4-pentylcyclohexyl)-biphenyl |
| 3% | 2-Fluor-4,4'-bis-(trans-4-propylcyclohexyl)-biphenyl |
| 4% | 2-Fluor-4-(trans-4-pentylcyclohexyl)-4'-(trans-4-propylcyclohexyl)-biphenyl |

zeigt S—N < −30°, Klp. +95°, Visk. 25, Schw. 1,7 V.

Beispiel 6

Ein Gemisch aus

| | |
|---|---|
| 6% | p-trans-4-Ethylcyclohexyl-benzonitril |
| 16% | p-trans-4-Propylcyclohexyl-benzonitril |
| 4% | P-Ethylbenzoesäure-(3-fluor-4-cyanphenylester) |
| 4% | p-Propylbenzoesäure-(3-fluor-4-cyanphenylester) |
| 6% | p-Pentylbenzoesäure-(3-fluor-4-cyanphenylester) |
| 3% | p-Ethylbenzoesäure-(p-cyanphenylester) |
| 2% | p-Pentylbenzoesäure-(p-cyanphenylester) |
| 11% | trans,trans-4-Methoxy-4'-propoxylcyclohexyl-cyclohexan |
| 10% | trans,trans-4-Methoxy-4'-pentylcyclohexyl-cyclohexan |
| 10% | trans,trans-4-Ethoxy-4'-pentylcyclohexyl-cyclohexan |
| 4% | trans,trans-4-Propylcyclohexyl-cyclohexan-4'-carbonsäure-(trans-4-propylcyclohexylester) |
| 4% | trans,trans-4-Propylcyclohexyl-cyclohexan-4'-carbonsäure-(trans-4-pentylcyclohexylester) |
| 4% | trans,trans-4-Butylcyclohexyl-cyclohexan-4'-carbonsäure-(trans-4-propylcyclohexylester) |
| 3% | trans,trans-4-Butylcyclohexyl-cyclohexan-4'-carbonsäure-(trans-4-pentylcyclohexylester) |
| 4% | 4,4'-Bis-(trans-4-propylcyclohexyl)-biphenyl |
| 5% | 4-(trans-4-Pentylcyclohexyl)-4'-(trans-4-propylcyclohexyl)-biphenyl |
| 4% | 2-Fluor-4-(trans-4-pentylcyclohexyl)-4'-(trans-4-propylcyclohexyl)-biphenyl |

zeigt S—N < −40°, Klp. +89°, Visk. 25, Schw. 1,3 V.

Beispiel 7

Ein Gemisch aus

| | |
|---|---|
| 5% | p-trans-4-Ethylcyclohexyl-benzonitril |
| 12% | p-trans-4-Propylcyclohexyl-benzonitril |
| 8% | p-trans-4-Butylcyclohexyl-benzonitril |
| 10% | p-trans-4-Pentylcyclohexyl-benzonitril |
| 6% | p-Ethylbenzoesäure-(3-fluor-4-cyanphenylester) |
| 8% | p-Propylbenzoesäure-(3-fluor-4-cyanphenylester) |
| 5% | p-(trans-4-Pentylcyclohexyl)-benzoesäure-(3-fluor-4-cyanphenylester) |
| 16% | trans,trans-4-Propylcyclohexyl-4'-propoxycyclohexan |
| 9% | 4-Ethyl-4'-(trans-4-propylcyclohexyl)-biphenyl |
| 8% | 4-Ethyl-4'-(trans-4-pentylcyclohexyl)-biphenyl |
| 3% | 4,4'-Bis-(trans-4-propylcyclohexyl)-biphenyl |
| 3% | 4-(trans-4-Pentylcyclohexyl)-4'-(trans-4-propylcyclohexyl)-biphenyl |
| 3% | 2-Fluor-4,4'-bis-(trans-4-propylcyclohexyl)-biphenyl |
| 4% | 2-Fluor-4-(trans-4-pentylcyclohexyl)-4'-(trans-4-propylcyclohexyl)-biphenyl |

zeigt S—N < −30°, Klp. +89°, Visk. 26, Schw. 1,4 V.

Beispiel 8

Ein Gemisch aus

| | |
|---|---|
| 15% | p-trans-4-Propylcyclohexyl-benzonitril |
| 6% | p-Ethylbenzoesäure-(3-fluor-4-cyanphenylester) |
| 8% | p-Propylbenzoesäure-(3-fluor-4-cyanphenylester) |
| 5% | o-Fluor-p-[trans-4-(trans-4-propylcyclohexyl)-cyclohexyl]-ethylbenzonitril |
| 13% | trans,trans-4-Propyl-4'-propoxycyclohexylcyclohexan |
| 13% | trans,trans-4-Methoxy-4'-pentylcyclohexylcyclohexan |
| 12% | trans,trans-4-Ethoxy-4'-pentylycyclohexylcyclohexan |

| | |
|---|---|
| 4% | trans,trans-4-Propylcyclohexyl-cyclohexan-4'-carbonsäure-(trans-4-propylcyclohexylester) |
| 4% | trans,trans-4-Propylcyclohexyl-cyclohexan-4'-carbonsäure-(trans-4-pentylcyclohexylester) |
| 4% | trans,trans-4-Butylcyclohexyl-cyclohexan-4'-carbonsäure-(trans-4-propylcyclohexylester) |
| 4% | trans,trans-4-Butylcyclohexyl-cyclohexan-4'-carbonsäure-(trans-4-pentylcyclohexylester) |
| 3% | 4,4'-Bis-(trans-4-propylcyclohexyl)-biphenyl |
| 3% | 4-(trans-4-Pentylcyclohexyl)-4'-trans-4-propylcyclohexyl)-biphenyl |
| 3% | 2-Fluor-4,4'-bis-(trans-4-propylcyclohexyl)-biphenyl |
| 3% | 2-Fluor-4-(trans-4-pentylcyclohexyl)-4'-(trans-4-propylcyclohexyl)-biphenyl |

zeigt S—N < −30°, Klp. +84°, Visk. 23, Schw. 1,5 V.

Beispiel 9

Ein Gemisch aus

| | |
|---|---|
| 15% | p-trans-4-Propylcyclohexyl-benzonitril |
| 6% | trans-1-p-Ethoxyphenyl-4-propylcyclohexan |
| 3,6% | p-Ethylbenzoesäure-(3-fluor-4-cyanphenylester) |
| 4,8% | p-Propylbenzoesäure-(3-fluor-4-cyanphenylester) |
| 5% | o-Fluor-p-[trans-4-(trans-4-propylcyclohexyl)-cyclohexyl]-benzonitril |
| 13,8% | trans,trans-4-Propyl-4'-propoxycyclohexylcyclohexan |
| 13,4% | trans,trans-4-Methoxy-4'-pentylcyclohexylcyclohexan |
| 12,4% | trans,trans-4-Ethoxy-4'-pentylcyclohexylcyclohexan |
| 2,4% | trans,trans-4-Propylcyclohexyl-cyclohexan-4'-carbonsäure-(trans-4-propylcyclohexylester) |
| 2,4% | trans,trans-4-Propylcyclohexyl-cyclohexan-4'-carbonsäure-(trans-4-pentylcyclohexylester) |
| 2,4% | trans,trans-4-Butylcyclohexyl-cyclohexan-4'-carbonsäure-(trans-4-propylcyclohexylester) |
| 2,4% | trans,trans-4-Butylcyclohexyl-cyclohexan-4'-carbonsäure-(trans-4-pentylcyclohexylester) |
| 3% | 4,4'-Bis-(trans-4-propylcyclohexyl)-biphenyl |
| 4,2% | 4-(trans-4-Pentylcyclohexyl)-4'-(trans-4-propylcyclohexyl)-biphenyl |
| 1,6% | 4,4'-Bis-(trans-4-pentylcyclohexyl)-biphenyl |
| 3,4% | 2-Fluor-4,4'-bis-(trans-4-propylcyclohexyl)-biphenyl |
| 4,2% | 2-Fluor-4-(trans-4-pentylcyclohexyl)-4'-(trans-4-propylcyclohexyl)-biphenyl |

zeigt S—N < −40°, Klp. +88°, Visk. 19, Schw. 1,7 V.

Beispiel 10

Ein Gemisch aus

| | |
|---|---|
| 5% | p-trans-4-Ethylcyclohexyl-benzonitril |
| 17% | p-trans-4-Propylcyclohexyl-benzonitril |
| 8% | p-trans-4-Butylcyclohexyl-benzonitril |
| 10% | p-trans-4-Pentylcyclohexyl-benzonitril |
| 3% | 4-Ethyl-4'-cyanbiphenyl |
| 6% | p-Ethylbenzoesäure-(3-fluor-4-cyanphenylester) |
| 8% | p-Propylbenzoesäure-(3-fluor-4-cyanphenylester) |
| 5% | p-[trans-4-(trans-4-Propylcyclohexyl)-cyclohexyl]-ethyl-isothiocyanatobenzol |
| 9% | trans-1-p-Ethoxyphenyl-4-propylcyclohexan |
| 11% | 4-Ethyl-4'-(trans-4-propylcyclohexyl)-biphenyl |
| 9% | 4-Ethyl-4'-(trans-4-pentylcyclohexyl)-biphenyl |
| 3% | 4,4'-Bis-(trans-4-propylcyclohexyl)-biphenyl |
| 4% | 4-(trans-4-Pentylcyclohexyl)-4'-(trans-4-propylcyclohexyl)-biphenyl |
| 3% | 2-Fluor-4,4'-bis-(trans-4-propylcyclohexyl)-biphenyl |
| 4% | 2-Fluor-4-(trans-4-pentylcyclohexyl)-4'-(trans-4-propylcyclohexyl)-biphenyl |

zeigt S—N < −30°, Klp. +91°, Visk. 25, Schw. 1,55 V.

Beispiel 11

Ein Gemisch aus

| | |
|---|---|
| 10% | p-trans-4-Ethylcyclohexyl-benzonitril |
| 18% | p-trans-4-Propylcyclohexyl-benzonitril |
| 10% | p-[trans-4-(trans-4-Propylcyclohexyl)-cyclohexyl]-isothiocyanatobenzol |
| 5% | p-Ethylbenzoesäure-(3-fluor-4-cyanphenylester) |
| 7% | p-Propylbenzoesäure-(3-fluor-4-cyanphenylester) |
| 13% | trans-1-p-Ethoxyphenyl-4-propylcyclohexan |
| 9% | 4-Ethyl-4'-(trans-4-propylcyclohexyl)-biphenyl |

| | |
|---|---|
| 8% | 4-Ethyl-4'-(trans-4-pentylcyclohexyl)-biphenyl |
| 4% | 4,4'-Bis-(trans-4-propylcyclohexyl)-biphenyl |
| 5% | 4-(trans-4-Pentylcyclohexyl)-4'-(trans-4-propylcyclohexyl)-biphenyl |
| 4% | 4,4'-Bis-(trans-4-pentylcyclohexyl)-biphenyl |
| 3% | 2-Fluor-4,4'-bis-(trans-4-propylcyclohexyl)-biphenyl |
| 4% | 2-Fluor-4-(trans-4-pentylcyclohexyl)-4'-(trans-4-propylcyclohexyl)-biphenyl |

zeigt S—N < −30°, Klp. +102°, Visk. 26, Schw. 1,8 V.

Beispiel 12

Es Gemisch aus

| | |
|---|---|
| 6% | p-trans-4-Ethylcyclohexyl-benzonitril |
| 16% | p-trans-4-Propylcyclohexyl-benzonitril |
| 4% | p-Ethylbenzoesäure(3-fluor-4-cyanphenylester) |
| 4% | p-Propylbenzoesäure-(3-fluor-4-cyanphenylester) |
| 6% | p-Pentylbenzoesäure(3-fluor-4-cyanphenylester) |
| 5% | p-[trans-4-(5-hexenyl)-cyclohexyl]-isothiocyanatobenzol |
| 11% | trans,trans-4-Propyl-4'-propoxylcyclohexylcyclohexan |
| 10% | trans,trans-4-Methoxy-4'-pentylcyclohexylcyclohexan |
| 10% | trans,trans-4-Ethoxy-4'-pentylcyclohexylcyclohexan |
| 4% | trans,trans-4-Propylcyclohexyl-cyclohexan-4'-carbonsäure-(trans-4-propylcyclohexylester) |
| 4% | trans,trans-4-Propylcyclohexyl-cyclohexan-4'-carbonsäure-(trans-4-pentylcyclohexylester) |
| 4% | trans,trans-4-Butylcyclohexyl-cyclohexan-4'-carbonsäure-(trans-4-propylcyclohexylester) |
| 3% | trans,trans-4-Butylcyclohexyl-cyclohexan-4'-carbonsäure-(trans-4-pentylcyclohexylester) |
| 4% | 4,4'-Bis-(trans-4-propylcyclohexyl)-biphenyl |
| 5% | 4-(trans-4-Pentylcyclohexyl)-4'-(trans-4-propylcyclohexyl)-biphenyl |
| 4% | 2-Fluor-4-(trans-4-pentylcyclohexyl)-4'-(trans-4-propylcyclohexyl)-biphenyl |

zeigt S—N < −40°, Klp. +91°, Visk. 23, Schw. 1,4 V.

Beispiel 13

Ein Gemisch aus

| | |
|---|---|
| 4% | p-Ethylbenzoesäure-(3-fluor-4-cyanphenylester) |
| 4% | p-Propylbenzoesäure-(3-fluor-4-cyanphenylester) |
| 8% | p-Pentylbenzoesäure-(3-fluor-4-cyanphenylester) |
| 6% | Heptylbenzoesäure-(3-fluor-4-cyanphenylester) |
| 5% | p-(trans-4-Propylcyclohexyl)-benzoesäure-(3-fluor-4-cyanphenylester) |
| 5% | p-(trans-4-Butylcyclohexyl)-benzoesäure-(3-fluor-4-cyanphenylester) |
| 4% | p-(trans-4-Pentylcyclohexyl)-benzoesäure-(3-fluor-4-cyanphenylester) |
| 19% | trans-1-p-Methoxyphenyl-4-propylcyclohexan |
| 17% | trans-1-p-Methoxyphenyl-4-pentylcyclohexan |
| 7% | trans,trans-4-Propyl-4'-propoxycyclohexylcyclohexan |
| 4% | 4-Ethyl-4'-(trans-4-propylcyclohexyl)-biphenyl |
| 4% | 4,4'-Bis-(trans-4-propylcyclohexyl)-biphenyl |
| 4% | 4,4'-Bis-(trans-4-propylcyclohexyl)-2-fluor-biphenyl |
| 5% | 4-(trans-4-Pentylcyclohexyl)-4'-(trans-4-propylcyclohexyl)-biphenyl |
| 4% | 4-(trans-4-Pentylcyclohexyl)-4'-(trans-4-propylcyclohexyl)-2-fluorbiphenyl |

zeigt S—N < −40°, Klp. +85°, Visk. 30, Schw. 1,4 V.

Beispiel 14

Ein Gemisch aus

| | |
|---|---|
| 4% | p-Ethylbenzoesäure-(3-fluor-4-cyanphenylester) |
| 6% | p-Propylbenzoesäure-(3-fluor-4-cyanphenylester) |
| 12% | p-Pentylbenzoesäure-(3-fluor-4-cyanphenylester) |
| 6% | p-Heptylbenzoesäure-(3-fluor-4-cyanphenylester) |
| 5% | p-(trans-4-Propylcyclohexyl)-benzoesäure-(3-fluor-4-cyanphenylester) |
| 7% | p-(trans-4-Butylcyclohexyl)-benzoesäure-(3-fluor-4-cyanphenylester) |
| 4% | p-(trans-4-Pentylcyclohexyl)-benzoesäure-(3-fluor-4-cyanphenylester) |
| 18% | trans-1-p-Methoxyphenyl-4-propylcyclohexan |
| 14% | trans,trans-4-Propyl-4'-propoxycyclohexylcyclohexan |
| 4% | 4-Ethyl-4'-(trans-4-propylcyclohexyl)-biphenyl |

3% 4-Ethyl-4'-(trans-4-pentylcyclohexyl)-biphenyl
4% 4,4'-Bis-(trans-4-propylcyclohexyl)-biphenyl
4% 4,4'-Bis-(trans-4-propylcyclohexyl)-2-fluorbiphenyl
5% 4-(trans-4-Pentylcyclohexyl)-4'-(trans-4-propylcyclohexyl)-biphenyl
4% 4-(trans-4-Pentylcyclohexyl)-4'-(trans-4-propylcyclohexyl)-fluorbiphenyl

zeigt S—N < −30°, Klp. +94°, Visk. 38, Schw. 1,2 V.

Beispiel 15

Ein Gemisch aus

3% p-Ethylbenzoesäure-(3-fluor-4-cyanphenylester)
4% p-Propylbenzoesäure-(3-fluor-4-cyanphenylester)
10% p-Pentylbenzoesäure-(3-fluor-4-cyanophenylester)
5% p-Heptylbenzoesäure-(3-fluor-4-cyanophenylester)
5% p-(trans-4-Propylcyclohexyl)-benzoesäure-(3-fluor-4-cyanophenylester)
6% p-(trans-4-Butylcyclohexyl)-benzoesäure-(3-fluor-4-cyanophenylester)
4% p-(trans-4-Pentylcyclohexyl)-benzoesäure-(3-fluor-4-cyanophenylester)
24% trans-1-p-Methoxyphenyl-4-propylcyclohexan
14% trans,trans-4-Propyl-4'-propoxycyclohexylcyclohexan
4% 4-Ethyl-4'-(trans-4-propylcyclohexyl)-biphenyl
4% 4-Ethyl-4'-(trans-4-pentylcyclohexyl)-biphenyl
4% 4,4'-Bis-(trans-4-propylcyclohexyl)-biphenyl
4% 4,4'-Bis-(trans-4-propylcyclohexyl)-2-fluorbiphenyl
5% 4-(trans-4-Pentylcyclohexyl)-4'-(trans-4-propylcyclohexyl)-biphenyl
4% 4-(trans-4-Pentylcyclohexyl)-4'-(trans-4-propylcyclohexyl)-2-fluorbiphenyl

zeigt S—N < −40°, Klp. +93°, Visk. 31, Schw. 1,5 V.

Beispiel 16

Ein Gemisch aus

5% p-Ethylbenzoesäure-(3-fluor-4-cyanophenylester)
5% p-Propylbenzoesäure-(3-fluor-4-cyanophenylester)
3% p-(trans-4-Propylcyclohexyl)-benzoesäure-(3-fluor-4-cyanphenylester)
7% trans-1-p-Methoxyphenyl-4-propylcyclohexan
21% trans,trans-4-Propyl-4'-propoxycyclohexylcyclohexan
21% trans,trans-4-Pentyl-4'-methoxycyclohexylcyclohexan
7% trans,trans-4-Pentyl-4'-ethoxycyclohexylcyclohexan
4% trans,trans-4-Propylcyclohexylcyclohexan-4'-carbonsäure-trans-4-propylcyclohexylester
5% trans,trans-4-Propylcyclohexylcyclohexan-4'-carbonsäure-trans-4-pentylcyclohexylester
5% trans,trans-4-Butylcyclohexylcyclohexan-4'-carbonsäure-trans-4-propylcyclohexylester
4% trans,trans-4-Butylcyclohexylcyclohexan-4'-carbonsäure-trans-4-pentylcyclohexylester
4% 4,4'-Bis-(trans-4-propylcyclohexyl)-2-fluor-biphenyl
4% 4,4'-Bis-(trans-4-pentylcyclohexyl)-2-fluor-biphenyl
5% 4-(trans-4-Pentylcyclohexyl)-4'-(trans-4-propylcyclohexyl)-2-fluorbiphenyl

zeigt S—N < −40°, Klp. +89°, Visk. 20, Schw. 2,0 V.

**Patentansprüche**

Flussigkristallanzeigeelement mit statischer oder Multiplex-Ansteuerung mit niedrigem Multiplexverhältnis und einer Betriebsspannung unterhalb 3,3 Volt, enthaltend ein flüssigkristallines Dielektrikum, dadurch gekennzeichnet, daß sich der Arbeitstemperaturbereich von −30°C bis +80°C erstreckt, die Viskosität des Dielektrikums bei 20°C weniger als 40 mPa·s beträgt und daß das Dielektrikum mindestens eine Komponente der Formel I enthält:

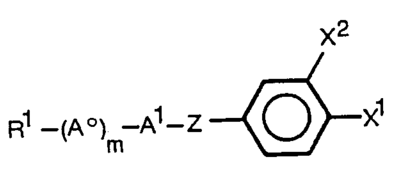

I

worin $R^1$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können,

$A^\circ$ und $A^1$ jeweils unabhängig voneinander Cy, Dio oder Phe,
Z —CO—O—, —O—CO—, —$CH_2$—O—, —O—$CH_2$— oder eine Einfachbindung,
$X^1$ F, Cl oder —CN,
$X^2$ F oder Cl,
m 0 oder 1,
Cy trans-1,4-Cyclohexylen,
Dio trans-1,3-Dioxan-2,5-diyl und
Phe unsubstituiertes oder durch Fluor substituiertes 1,4-Phenylen bedeutet,
mit der Maßgabe, daß das Dielektrikum keine Komponente der Formel II enthält

$$R^2—Dio—A^2—(Z—A^3)_n—R^3 \quad II$$

worin $R^2$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können,
$R^3$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können, F, Cl oder CN,
$A^2$ und $A^3$ jeweils 1,4-Phenylen oder Cy,
n 0, 1 oder 2 bedeutet und
Z, Dio und Cy die angegebenen Bedeutungen haben.

**Revendication**

Elément d'affichage à cristaux liquides avec une commande statique ou multiplex présentant un rapport multiplex faible et une tension de fonctionnement inférieure à 3,3 volts, contenant un diélectrique à cristaux liquides, caractérisé en ce que la gamme de températures de fonctionnement s'étend de −30°C à +80°C, en ce que la viscosité du diélectrique à 20°C est inférieure à 40 m Pa·s et en ce que le diélectrique contient au moins un composant de formule I:

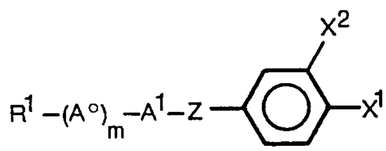
I

où $R^1$ représente un alkyle ayant 1 à 12 atomes de C dans lequel également un ou deux groupes $CH_2$ non voisins peuvent être remplacés par des atomes d'O, des groupes —CO, —O—CO, —CO—O et/ou —CH=CH,
$A^\circ$ et $A^1$ indépendamment l'un de l'autre Cy, Dio ou Phe,
Z —CO—O, —O—CO—, —$CH_2$—O—, —O—$CH_2$— ou une simple liaison,
$X^1$ F, Cl ou —CN,
$X^2$ F ou Cl,
m 0 ou 1,
Cy le trans-1,4-cyclohexylène,
Dio le trans-1,3-dioxanne-2,5-diyle et
Phe le 1,4-phénylène non substitué ou substitué par le fluor,
sous la réserve que le diélectrique ne contienne aucun composant de formule II

$$R^2—Dio—A^2—(Z—A^3)_n—R^3 \quad II$$

ou $R^2$ représente un alkyle ayant 1 à 12 atomes de C dans lequel également un ou deux groupes $CH_2$ non voisins peuvent être remplacés par des atomes d'O, des groupes —CO, —O—CO, —CO—O et/ou des groupes —CH=CH,
$R^3$ représente un alkyle ayant 1 à 12 atomes de C dans lequel également un ou deux groupes $CH_2$ non voisins peuvent être remplacés par des atomes d'O des groupes —CO, —O—CO, —CO—O et/ou des groupes —CH=CH, F, Cl ou CN,
$A^2$ et $A^3$ représentent le 1,4-phénylène ou Cy,
n est égal à 0, 1 ou 2 et,
Z, Dio et Cy ont les significations indiquées.

**Claim**

Liquid crystal display element with static or multiplex drive, having a low multiplex ratio and an operating voltage below 3.3 volts, containing a liquid crystal dielectric, characterized in that the operating temperature range extends from −30°C to +80°C, the viscosity of the dielectric at 20°C is less than 40 mPa·s

and the dielectric contains at least one component of the formula I

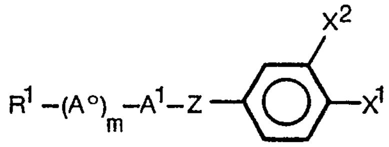

I

wherein $R^1$ is alkyl of 1 to 12 C atoms, wherein one or two non-adjacent $CH_2$ groups can also be replaced by O atoms, —CO—, —O—CO—, —CO—O— and/or —CH=CH— groups,

A° and $A^1$ each independently of one another are Cy, Dio or Phe,

Z is —CO—O, —O—CO—, $—CH_2—O—$, $—O—CH_2$ or a single bond,

$X^1$ is F, Cl or —CN,

$X^2$ is F or Cl,

m is 0 or 1,

CY is trans-1,4-cyclohexylene,

Dio is trans-1,3-dioxane-2,5-diyl and

Phe is 1,4-phenylene which is unsubtituted or substituted by fluorine, with the proviso that the dielectric does not contain any component of the formula II

$$R^2—Dio—A^2—(Z—A^3)_n—R^3 \qquad II$$

in which $R^2$ is alkyl of 1 to 12 C-atoms, in which one or two non-adjacent $CH_2$ groups can also be replaced by O atoms, —CO—, —O—CO—, —CO—O— and/or —CH=CH— groups,

$R^3$ is alkyl of 1 to 12 C atoms, in which one or two non-adjacent $CH_2$ groups can also be replaced by O atoms, —CO—, —O—CO—, —CO—O— and/or —CH=CH groups, F, Cl or CN,

$A^2$ and $A^3$ are each 1,4-phenylene or Cy,

n is 0, 1 or 2 and

Z, Dio and Cy have the meanings given.